Europäisches Patentamt

European Patent Office

Office européen des brevets

(11) Veröffentlichungsnummer: **0 318 816**
**A2**

(12) # EUROPÄISCHE PATENTANMELDUNG

(21) Anmeldenummer: 88119510.1

(22) Anmeldetag: 23.11.88

(51) Int. Cl.⁴: **F16F 9/46 , B60G 17/08**

(30) Priorität: 28.11.87 DE 3740404

(43) Veröffentlichungstag der Anmeldung:
07.06.89 Patentblatt 89/23

(84) Benannte Vertragsstaaten:
AT BE CH DE ES FR GB GR IT LI LU NL SE

(71) Anmelder: **Hermann Hemscheidt
Maschinenfabrik GmbH & Co.
Bornberg 97-103
D-5600 Wuppertal 1(DE)**

(72) Erfinder: **Hummel, Kurt M.
Röttgen 79
D-5600 Wuppertal 1(DE)**

(54) **Hydraulischer Stoss- und Schwingungsdämpfer mit regelbarer Dämpfung.**

(57) Hydraulischer Stoß- und Schwingungsdämpfer, bestehend aus einem Zylinder (1), einem innerhalb des Zylinders (1) zwei mit einem hydraulischen Dämpfungsmedium gefüllte und über mindestens eine Drosselung (62) verbundene Arbeitsräume (9, 10) abteilenden, axialbeweglich angeordneten Dämpfungskolben (2), einer mit dem Dämpfungskolben (2) verbundenen, abgedichtet aus dem Zylinder (1) nach außen geführten Kolbenstange (3) sowie einem mit einem (9) der Arbeitsräume (9, 10) verbundenen Ausgleichsraum (11) zur Aufnahme eines von der Kolbenstange (3) verdrängten Volumens des Dämpfungsmediums. Am Übergang zwischen dem Arbeitsraum (9) und dem Ausgleichsraum (11) ist ein über einen Elektromagneten (24) ansteuerbares, mit einer Schließkraft beaufschlagtes Dämpfungsventil (26) angeordnet. Dieses Dämpfungsventil (26) ist derart in Reihe zu der Drosselung (62) angeordnet, daß das gesamte zwischen dem Arbeitsraum (9) und dem Ausgleichsraum (11) strömende Dämpfungsmedium durch das Dämpfungsventil (26) fließt. Der Elektromagnet (24) ist dabei derart mit einem Ventilkörper (30) des Dämpfungsventils (26) verbunden, daß dessen Schließkraft unmittelbar durch den Elektromagneten (24) veränderbar ist.

Fig. 1

## Hydraulischer Stoß- und Schwingungsdämpfer mit regelbarer Dämpfung

Die vorliegende Erfindung betrifft einen hydraulischen Stoß- und Schwingungsdämpfer, bestehend aus einem Zylinder, einem innerhalb des Zylinders zwei mit einem hydraulischen Dämpfungsmedium gefüllte und über mindestens eine Drosselung verbundene Arbeitsräume abteilenden, axialbeweglich angeordneten Dämpfungskolben, einer mit dem Dämpfungskolben verbundenen, abgedichtet aus dem Zylinder nach außen geführten Kolbenstange sowie einem mit einem der Arbeitsräume verbundenen Ausgleichsraum zur Aufnahme eines von der Kolbenstange verdrängten Volumens des Dämpfungsmediums, wobei am Übergang zwischen dem Arbeitsraum und dem Ausgleichsraum ein über einen Elektromagneten ansteuerbares, mit einer Schließkraft beaufschlagtes Dämpfungsventil angeordnet ist.

Ein derartiger Dämpfer, wie er insbesondere für Kraftfahrzeuge Verwendung findet, ist aus der DE-OS 37 12 477 bekannt. Bei diesem bekannten Dämpfer befinden sich am Übergang zwischen dem Arbeitsraum und dem Ausgleichsraum einerseits in einem Bypass das elektromagnetisch ansteuerbare Dämpfungsventil sowie andererseits - hierzu parallel -im Boden des Zylinders weitere Ventile, über deren Querschnitte das durch die Kolbenstange verdrängte Dämpfungsmedium-Volumen in den Ausgleichsraum verdrängt wird. Das steuerbare Dämpfungsventil beeinflußt folglich nur einen Teil der Strömung zwischen dem Arbeitsraum und dem Ausgleichsraum, so daß der Regel- bzw. Steuerbereich nur klein ist. Das Dämpfungsventil ist als Sitzventil ausgebildet, wobei ein zur Erzeugung einer Schließkraft federbelasteter Ventilkörper mit einer Ringfläche auf einer Ventilsitzfläche zur Auflage kommt. Der Ventilkörper bildet den Anker eines Elektromagneten, so daß er sich durch die Wirkung des Elektromagneten gegen die Schließkraft von der Ventilsitzfläche abhebt und so zum Öffnen des Ventils einen ringförmigen Strömungsquerschnitt bildet. Da aber das geöffnete Dämpfungsventil praktisch keine Dämpfungswirkung mehr besitzt, ist diesem noch ein weiteres, als Federplattenventil ausgebildetes Dämpfungsventil in Reihe nachgeordnet, welches eine konstante, nicht veränderbare Dämpfung bewirkt. Beide Ventile, d.h. das elektromagnetisch ansteuerbare Dämpfungsventil und das Federplattenventil, sind seitlich an einem äußeren Mantelrohr des Dämpfers befestigt, was je nach Einbaulage des Dämpfers nachteilig sein kann. Ferner ist der bekannte Dämpfer aufgrund der vielen vorgesehenen Ventile konstruktiv sehr aufwendig. Dabei ist - wie bereits erwähnt - der Verstellbereich der Dämpfung für viele Anwendungsfälle zu klein.

Aus der DE-OS 33 34 704 ist ebenfalls ein regelbarer Stoßdämpfer bekannt, wobei der Dämpfungskolben elektromagnetisch steuerbare Hilfsventile aufweist, die die eigentlichen Drosselventile des Kolbens beeinflussen. Nachteilig ist, daß an dem Kolben Elektromagnete befestigt sind, wodurch die sich bewegende Masse des Kolbens nachteiligerweise vergrößert wird. Außerdem müssen zur Spannungsversorgung der Elektromagnete elektrische Leitungen durch die Kolbenstange geführt sein. Ferner ist die Steuerung sehr träge, da sich in den Hilfsventilen erst ein Staudruck durch die Kolbenbewegung und die hierdurch bewirkte Dämpfungsmedium-Strömung aufbauen muß.

Aus der DE-OS 34 27 843 ist ein weiterer regelbarer Dämpfer bekannt, bei dem jedoch eine Verstellung der Dämpfung über ein mechanisches Verstellen von in einem Bypass wirksamen Strömungsöffnungen erfolgt. Es ist hierdurch nur eine stufige Verstellung möglich. Eine automatische Regelung der Dämpfung zur Anpassung an unterschiedliche Erfordernisse ist aufgrund der Trägheit der Verstellung mit diesem bekannten Dämpfer nicht möglich.

Der vorliegenden Erfindung liegt die Aufgabe zugrunde, einen Stoß- und Schwingungsdämpfer der gattungsgemäßen Art zu schaffen, dessen Dämpfungskraft in einem sehr weiten Stellbereich möglichst zeitverzögerungsfrei verstellbar ist, der dabei aber dennoch eine konstruktiv einfache, kompakte und stabile Bauform besitzt und preiswert in der Herstellung ist.

Erfindungsgemäß wird dies dadurch erreicht, daß das Dämpfungsventil derart in Reihe zu der Drosselung angeordnet ist, daß das gesamte zwischen dem Arbeitsraum und dem Ausgleichsraum strömende Dämpfungsmedium durch das Dämpfungsventil fließt, und daß der Elektromagnet derart mit einem Ventilkörper des Dämpfungsventils verbunden ist, daß dessen Schließkraft unmittelbar durch den Elektromagneten veränderbar ist.

Da das Dämpfungsventil des erfindungsgemäßen Dämpfers somit das gesamte zwischen dem Arbeitsraum und dem Ausgleichsraum strömende Medium beeinflussen kann, besitzt der erfindungsgemäße Dämpfer einen sehr großen Regelbereich, und zwar kann die Dämpfkraft vorteilhafterweise zwischen einem Minimum und einem Maximum stufenlos verändert werden. Dabei sind vorteilhafterweise auch keinerlei zusätzliche, in parallelen Bypass-Passagen oder in Reihe angeordnete Ventile erforderlich, so daß der erfindungsgemäße Dämpfer mit nur einem Dämpfungsventil sehr einfach aufgebaut und damit auch preisgünstig herzustellen ist. Im Gegensatz hierzu wird bei den aus dem Stand der Technik bekannten Dämpfern stets nur ein Teil des zwischen dem Arbeitsraum und dem Ausgleichsraum strömenden Mediums über das Dämpfungsventil geführt, während ein anderer Teil über in einem parallelen Bypass angeordnete, zusätzliche Ventile praktisch an dem Dämpfungsventil vorbei ungeregelt strömen kann. Ferner wird das Dämpfungsventil - im Gegensatz zu dem bekannten, gattungsgemäßen Dämpfer, bei dem das Dämpfungsventil elektromagnetisch geöffnet und durch Federkraft sowie durch den Druck des Dämpfungsmediums geschlossen wird - erfindungsgemäß allein durch die Strömung des Dämpfungsmediums betätigt, wobei der Elektromagnet nur die der Strömung entgegenwirkende Schließkraft des Dämpfungsventils beeinflußt, so daß vorteilhafterweise eine direkt von den dynamischen Bewegungen des Dämpfers abhängige, regelbare Dämpfung gewährleistet ist.

Der erfindungsgemäße, beispielsweise hydropneumatische Stoß- und Schwingungsdämper ist im Betrieb über Meßwerte eine elektronischen Steuerung, z.B. eines Fahrzeugs, die Aufschluß über die jeweilige Fahrgeschwindigkeit, Einfederungsgeschwindigkeit, Kurvenfahrt, Belastungszustand usw. geben, hinsichtlich seiner Dämpfungskraft nahezu verzögerungsfrei sowie stufenlos regelbar. Die Meßwerte werden von der elektronischen Steuerung in eine bestimmte Spannung und/oder Stromstärke umgesetzt und dem Elektromagneten zugeführt, der hierdurch die Schließkraft des Dämpfungsventils und damit auch den zum Öffnen erforderlichen Öffnungsdruck des Dämpfungsmediums in einer oder in beiden Wirkrichtungen des Dämpfers verändert. Der erfindungsgemäße Stoß- und Schwingungsdämpfer kann daher optimal auf den jeweiligen Belade- und Fahrzustand eingestellt werden. Alternativ oder aber zusätzlich zu einer derartigen automatischen Dämpfer-Regelung ist es ebenfalls möglich, die Dämpfkraft des erfindungsgemäßen Dämpfers manuell einzustellen, was beispielsweise über einen Potentiometer erfolgen kann, mit dem die dem Elektromagneten zugeführte Spannung bzw. der entsprechende Strom eingestellt werden kann. Entsprechend dieser Einstellung wird erfindungsgemäß die Schließkraft des Dämpfungsventils und damit auch die Dämpfkraft unmittelbar bestimmt. Dies bedeutet, daß durch die erfindungsgemäße Wirkung des Elektromagneten praktisch jede beliebige Dämpfkraft-Kennlinie innerhalb eines Kennlinien-Feldes automatisch und/oder manuell ausgewählt und eingestellt werden kann.

Weitere vorteilhafte Ausgestaltungsmerkmale der Erfindung sind in den Unteransprüchen enthalten.

Die Erfindung wird nachfolgend anhand der beiliegenden Zeichnung beispielhaft näher erläutert. Dabei zeigen:

Fig. 1 eine erste Ausführungsform eines erfindungsgemäßen Stoß- und Schwingungsdämpfers im Längsschnitt in schematischer Darstellung während des Einfederns,

Fig. 2 eine Darstellung analog zu Fig. 1, jedoch während des Ausfederns, und

Fig. 3 einen gegenüber Fig. 1 und 2 vergrößerten Teil-Längsschnitt einer zweiten Ausführungsform des erfindungsgemäßen Dämpfers in einer neutralen Stellung.

In den verschiedenen Zeichnungsfiguren sind gleiche Teile jeweils mit den gleichen Bezugszeichen bezeichnet.

In der Zeichnung ist beispielhaft ein hydropneumatischer Stoß- und Schwingungsdämpfer - im folgenden lediglich Dämpfer genannt - dargestellt, der im wesentlichen aus einem Zylinder 1, einem innerhalb des Zylinders 1 axialbeweglich angeordneten Dämpfungskolben 2 und einer mit diesem verbundenen, abgedichtet aus dem Zylinder 1 nach außen geführten Kolbenstange 3 besteht. An ihrem freien Ende besitzt die Kolbenstange 3 ein Anschlußstück 4, welches mit einer nicht dargestellten, zu dämpfenden Masse, beispielsweise einem Fahrzeugrad, verbindbar ist. Der Zylinder 1 ist mit einem Kopfteil 5 beispielsweise an einem ebenfalls nicht dargestellten Fahrzeugrahmen zu befestigen.

Die Kolbenstange 3 ist vorzugsweise hohlzylindrisch ausgebildet und an ihrem aus dem Zylinder 1 ragenden Ende bis auf eine Entlüftungsöffnung 60 geschlossen. Innerhalb des Zylinders 1 ist ein an dem Kopfteil 5 befestigtes Innenrohr 6 koaxial angeordnet, welches sich mit einem geschlossenen Ende etwa bis zu dem dem Kopfteil 5 gegenüberliegenden Ende des Zylinders 1 sowie in die hohlzylindrische Kolbenstange 3 hinein erstreckt. Hierzu ist der Dämpfungskolben 2 ringförmig ausgebildet, so daß er das Innenrohr 6 in einem zwischen diesem und dem Zylinder 1 gebildeten Zylinder-Ringraum umschließt. Die hohlzylindrische Kolbenstange 3 ist hierdurch vorteilhafterweise mit ihrer Innenwandung über den gesamten Hub des Dämpfungskolbens 2 an dem Außenmantel des Innenrohrs 6 geführt. Zur Abdichtung der Kolbenstange 3 sind zwischen dieser und dem Zylinder 1 ein äußerer Dichtring 7 sowie zwischen dem Innenrohr 6 und dem Innenumfang der Kolbenstange 3 ein innerer Dichtring 8 angeordnet.

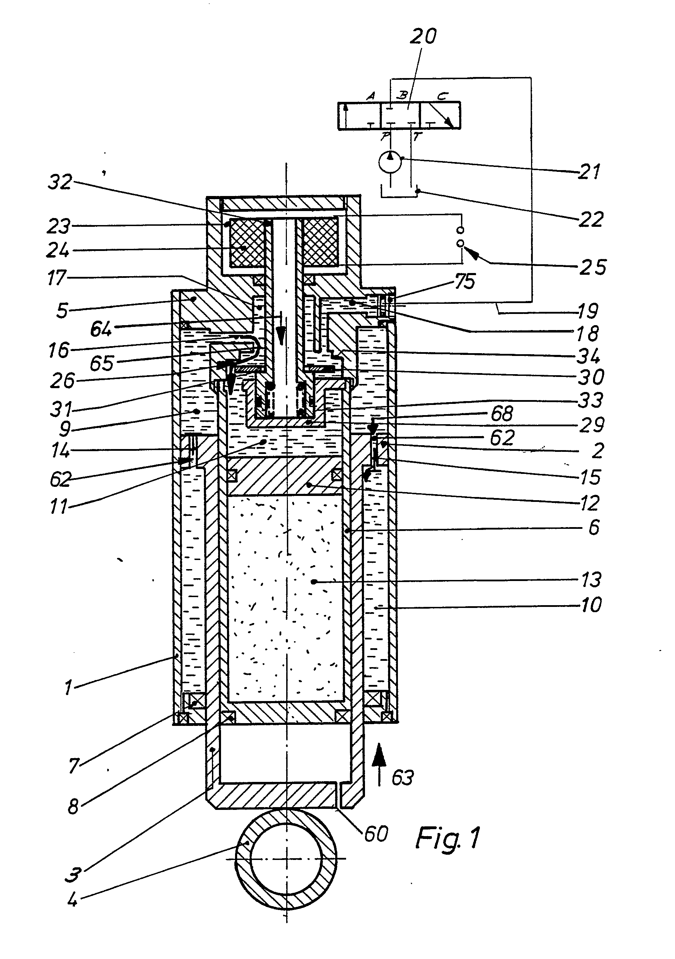

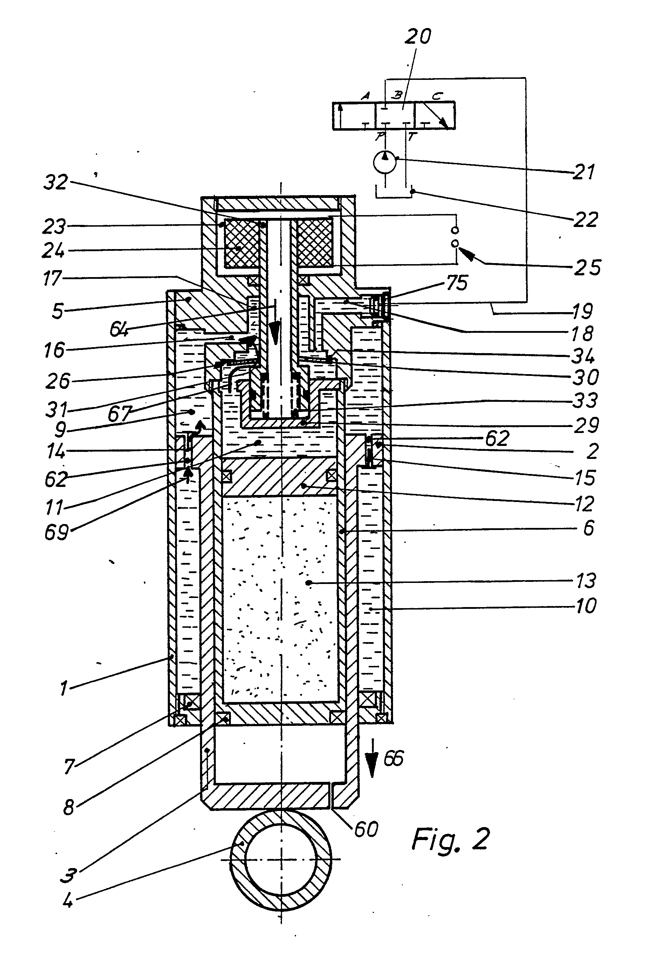

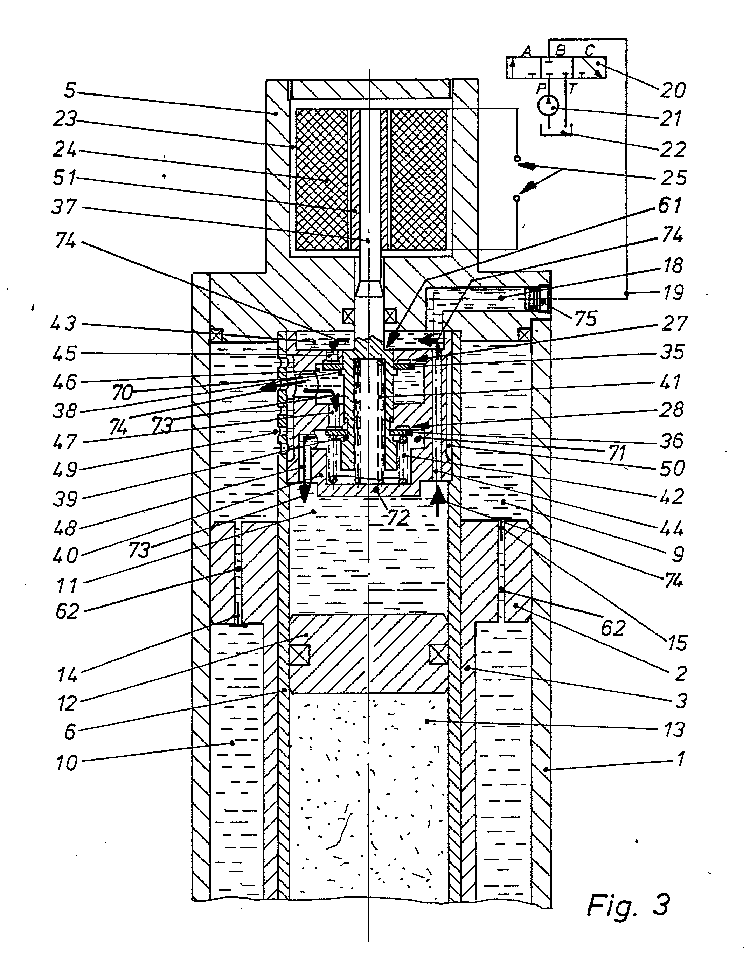

Der ringförmige Dämpfungskolben 2 unterteilt den Zylinder-Ringraum in einen dem Kopfteil 5 zugekehrten, oberen Arbeitsraum 9 und einen dem Kopfteil 5 abgekehrten, unteren Arbeitsraum 10. Die beiden Arbeitsräume 9 und 10 sind mit einem hydraulischen Dämpfungsmedium gefüllt. Der obere Arbeitsraum 9 ist mit einem innerhalb des Innenrohres 6 gebildeten Ausgleichsraum 11 verbunden, der zur Aufnahme eines von der Kolbenstange 3 verdrängten Volumens des Dämpfungsmediums dient. In dem Ausführungsbeispiel nach Fig. 1 und 2 besitzt für diese Verbindung das Kopfteil 5 mindestens einen Querkanal 16, der in eine zentrische Kammer 17 des Kopfteils 5 mündet. Zwischen dieser zentrischen Kammer 18 und dem Ausgleichsraum 11 ist - wie dies im folgenden noch erläutert wird - ein regelbares Dämpfungsventil 26 angeordnet. Im Ausführungsbeispiel nach Fig. 3 ist zur Verbindung des oberen Arbeitsraumes 9 mit dem Ausgleichsraum 11 vorgesehen, daß das Innenrohr 6 in seinem Mangel mindestens eine Querbohrung 49 aufweist, die auch in diesem Fall über ein Dämpfungsventil 61 mit dem Ausgleichsraum 11 verbunden ist, wie dies im folgenden noch beschrieben wird.

Innerhalb des Innenrohres 6 ist weiterhin als Begrenzung des Ausgleichsraums 11 ein schwimmender Kolben 12 freibeweglich angeordnet, der den Ausgleichsraum 11 von einer ebenfalls innerhalb des Innenrohres 6 gebildeten Gasfederkammer 13 trennt, in der ein elastisch kompressibles Medium, z.B. Luft, angeordent ist. Alternativ zu der in Fig. 1 und 2 dargestellten Ausführungsform ist es ebenfalls möglich, daß das Innenrohr 6 einen offenen Boden und die hohlzylindrische Kolbenstange einen geschlossenen Boden aufweisen. Hierdurch vergrößert sich vorteilhafterweise das Volumen der Gasfederkammer, so daß hiermit die pneumatische Federkraft und/oder Federkennlinie des erfindungsgemäßen Dämpfers beeinflußt werden kann.

Der Dämpfungskolben 2 weist in den dargestellten Ausführungsbeispielen der Erfindung zwei vorzugsweise mit jeweils einem Drosselventil 14, 15 versehene Drosselungen 62 auf, über die die beiden Arbeitsräume 9 und 10 miteinander verbunden sind, um bei Bewegungen des Dämpfungskolbens 2 eine Strömung des Dämpfungsmediums zwischen den beiden Arbeitsräumen 9 und 10 zu gewährleisten, wobei hierdurch bereits eine Dämpfung bzw. Drosselung erreicht werden kann. Durch spezielle Ausgestaltung der Drosselungen 62 bzw. der Drosselventile 14, 15 können zudem unterschiedliche Zug-und Druckstufen gewährleistet sein.

Am Übergang zwischen dem oberen Arbeitsraum 9 und dem Ausgleichsraum 11 ist - wie bereits erwähnt - das regelbare Dämpfungsventil 26 bzw. 61 angeordnet, von dem im folgen den zwei alternative Ausgestaltungen beispielhaft genauer erläutert werden sollen.

Gemäß Fig. 1 und 2 erweitert sich die zentrische Kammer 17 des Kopfteils 5 in Richtung des Ausgleichsraumes 11 über eine Ringstufe 34, die eine ringförmige Ventilsitzfläche für einen ringscheibenförmigen Ventilkörper 30 des Dämpfungsventils 26 bildet. Durch die zentrische Kammer 17 sowie durch den ringscheibenförmigen Ventilkörper 30 hindurch erstreckt sich ein Ventilstößel 32, der sich auf der dem Ausgleichsraum 11 zugekehrten Seite des Ventilkörpers 30 über eine Ringstufe 31 erweitert. Der Ventilkörper 30 sitzt dabei freibeweglich auf dem Ventilstößel 32, wobei er mit seinem inneren Ringumfang den "dünneren" Abschnitt des Ventilstößels 32 über einen schmalen Ringspalt beabstandet umschließt. Innerhalb des freien, über die Ringstufe 31 erweiterten Endes des Ventilstößels 32 ist in einer stirnseitigen Ausnehmung eine vorgespannte Ventilfeder 33 angeordnet, die sich einseitig an einer Ring- oder Bodenfläche der Ausnehmung des Ventilstößels 32 und anderseitig an einem Boden einer ortsfest im Übergangsbereich zwischen dem Kopfteil 5 und dem Innenrohr 6 gehalterten Einsatzhülse 29 abstützt. Die Einsatzhülse 29 dient dabei gleichzeitig zur Führung des erweiterten Endes des Ventilstößels 32. Durch die Ventilfeder 33 wird der scheibenförmige Ventilkörper 30 in einer neutralen Stellung, in der der Dämpfungskolben 2 statisch, d.h. unbeweglich in dem Zylinder 1 angeordnet ist, dichtend zwischen der Ringstufe 31 des Ventilstößels 32 und der Ringstufe 34 der Kammer 17 "eingespannt", so daß folglich das Dämpfungsventil 61 geschlossen ist. Der Ventilstößel 32 ist mit seinem dem Ventilkörper 30 abgekehrten Ende mit einem in Fig. 1 und 2 nicht dargestellten Anker eines in einer Kammer 23 des Kopfteils 5 angeordneten Elektromagneten 24 verbunden, oder aber der Ventilstößel 32 bildet unmittelbar den Anker des Elektromagneten 24.

Die Funktion des Dämpfers gemäß Fig. 1 und 2 ist nun wie folgt. Während des Betriebs wird der Dämpfungskolben 2 in dem Zylinder 1 in axialer Richtung hin und her bewegt. Mit den Hubbewegungen des Dämpfungskolbens 2 tritt das Dämpfungsmedium über die Drosselungen 62 bzw. über die Drosselventile 14, 15 wechselweise von einem in den anderen Arbeitsraum 9, 10 über. Zusätzlich hierzu wird eine Strömung eines dem Volumen der in den Zylinder 1 eintauchenden Kolbenstange 3 entsprechenden Volumens des Dämpfungsmediums zwischen dem oberen Arbeitsraum 9 und dem Ausgleichsraum 11 bewirkt. Diese Strömung wird über das erfindungsgemäße Dämpfungsventil 26 stufenlos regelbar gedämpft bzw. gedrosselt.

In Fig. 1 ist der Zustand beim "Einfedern" dargestellt, d.h. der Dämpfungskolben 2 wird über die Kolbenstange 3 in Pfeilrichtung 63 in den Zylinder 1 hineinbewegt. Über das hierdurch öffnende Drosselventil 15 des Dämpfungskolbens 2 strömt einerseits Dämpfungsmedium in Pfeilrichtung 68 von dem oberen Arbeitsraum 9 in den unteren Arbeitsraum 10. Andererseits verdrängt die Kolbenstange 3 ein Volumen des Dämpfungsmediums, welches über den Querkanal 16 und die zentrische Kammer 17 den scheibenförmigen Ventilkörper 30 beaufschlagt, bis eine durch den Strömungsdruck erzeugte Öffnungskraft größer als die jeweilige Schließkraft des Ventils 26 ist, wodurch dann übr den Ventilkörper 30 der Ventilstößel 32 gegen die Schließkraft, d.h. in Pfeilrichtung 64, axial in Richtung des Ausgleichsraums 11 bewegt wird. Hierdurch bildet sich zwischen dem scheibenförmigen Ventilkörper 30 und der den Ventilsitz bildenden Ringstufe 34 ein Ringspalt, über den in Pfeilrichtung 65 das Dämpfungsmedium gedrosselt in den Ausgleichsraum 11 einströmen kann. Hierdurch wird der schwimmende Kolben 12 innerhalb des Innenrohrs 6 axial verschoben, wodurch das in der Gasfederkammer 13 befindliche Medium komprimiert und eine Federwirkung erzielt wird. Bei Beendigung der Einschubbewegung des Dämpfungskolbens 2 schließt dann das Ventil 26 aufgrund der Schließkraft über den Ventilkörper 30.

In Fig. 2 ist nun der Zustand dargestellt, in dem sich der Dämpfungskolben 2 durch einen Zug an der Kolbenstange 3 in Pfeilrichtung 66 wieder zurück in Richtung des dem Kopfteil 5 abgekehrten Endes des Zylinders 1 bewegt. Hierbei strömt einerseits das Dämpfungsmedium über das Drosselventil 14 in Pfeilrichtung 69 aus dem unteren Arbeitsraum 10 wieder in den oberen Arbeitsraum 9, und andererseits erfolgt auch eine Rückströmung des Dämpfungsmediums aus dem Ausgleichsraum 11 über das Dämpfungsventil 26 in den oberen Arbeitsraum 9. Diese Rückströmung wird dadurch bewirkt, daß der Druck in dem Ausgleichsraum 11 den Druck in dem oberen Arbeitsraum 9 sowie in der zentrischen Kammer 17 übersteigt, so daß sich zwischen dem an der Ringstufe 34 anliegenden Ventilkörper 30 und der Ringstufe 31 des Ventilstößels 32 durch druckbedingte, axiale Bewegung des Ventilstößels 32 in Pfeilrichtung 64 ein Ringspalt bildet, durch den das Dämpfungsmedium gedrosselt in Pfeilrichtung 67 aus dem Ausgleichsraum 11 über die Kammer 17 und den Querkanal 16 zurück in den oberen Arbeitsraum 9 strömt.

Die Schließkraft des Dämpfungsventils 26 wird einerseits durch die vorgespannte Ventilfeder 33 erzeugt. Diese Schließkraft ist jedoch andererseits erfindungsgemäß durch eine von dem Elektromagneten 24 erzeugte und über den Ventilstößel 32 auf den scheibenförmigen Ventilkörper 30 übertragene Kraft zusätzlich verstellbar, indem dem Elektromagneten 24 z.B. in Abhängigkeit von durch eine elektronische Ansteuerung erzeugten Meßdaten eine bestimmte Spannung und/oder ein bestimmter Strom über elektrische Anschlüsse 25 zugeführt wird. Der Elektromagnet steuert somit über die Schließkraft der Ventilscheibe 30 unmittelbar die Ventileinstellung des erfindungsgemäßen Dämpfungsventils 26. Auf diese Weise wird die wirksame Dämpfungskraft beispielsweise beim Überfahren einer Bodenunebenheit ohne zeitliche Verzögerung automatisch an die jeweilige Situation angeglichen.

Im Ausführungsbeispiel des erfindungsgemäßen Dämpfers gemäß Fig. 3 ist das Dämpfungsventil 61 vorteilhafterweise als Doppelventil mit zwei Teilventilen 27 und 28 ausgebildet, die jeweils einen ringscheibenförmigen Ventilkörper 35, 36 aufweisen, wobei das Teilventil 28 mit dem Ventilkörper 36 die Strömung in den Ausgleichsraum 11 hinein und das andere Teilventil 27 mit dem Ventilkörper 35 die Strömung aus dem Ausgleichsraum 11 heraus dämpfend beeinflußt. Innerhalb des an das Kopfteil 5 angrezenden Endbereichs des Innenrohrs 6 ist ein im wesentlichen zylindrisches, aus Herstellungs-und Montagegründen vorzugsweise mehrteiliges Einsatzteil 40 ortsfest angeordnet. Das Einsatzteil 40 besitzt in seiner an der Innenwandung des Innenrohrs 6 anligenden Umfangsfläche eine Ringnut, wodurch zwischen dem Einsatzteil 40 und dem Innenrohr 6 ein Ringkanal 50 gebildet ist. In einem in axialer Richtung im Bereich des Ringkanals 50 angeordneten Bereich besitzt das Innenrohr 6 in seiner Wandung mindestens eine Querbohrung 49, die den oberen Arbeitsraum 9 mit dem Ringkanal 50 verbindet. Der Ringkanal 50 ist über mindestens einen Querkanal 70 mit einer innerhalb des Einsatzteils 40 gebildeten, zentrischen Kammer 46 verbunden. Eine dem Kopfteil 5 zugekehrte Fläche dieser zentrischen Kammer 46 bildet die Ventilsitzfläche für den ringscheibenförmigen Ventilkörper 35 des ersten Teilventils 27. In dieser Ventilsitzfläche mündet mindestens ein axialer Kanal 45, der auf seiner anderen, dem Kopfteil 5 zugekehrten Seite in einer durch eine stirnseitige Ausnehmung des Einsatzteils 40 gebildeten Kammer 43 mündet. Ausgehend von der zentrischen Kammer 46 des Einsatzteils 40 erstreckt sich weiterhin mindestens ein axialer Kanal 47 bis in den Bereich einer dem Kopfteil 5 zugekehrten, eine Ventilsitzfläche für den Ventilkörper 36 des zweiten Teilventils 28 bildenden Fläche einer Aufnahmekammer 71, die über mindestens einen Kanal 48 mit dem Ausgleichsraum 11 verbunden ist. Der Ausgleichsraum 11 ist weiterhin unmittelbar über einen axialen Kanal 44 mit der stirnseitigen Kammer 43 verbunden. Zentrisch durch das Einsatzteil 40 sowie durch die beiden ringscheibenförmigen Ventilkörper 35 und 36 hindurch erstreckt sich ein Ventilstößel 37, der jeweils mit einer Ringstufe 38 bzw. 39 an der dem Kopfteil 5 abgekehrten Seite der Ventilkörper 35 und 36 anliegt. In einer dem Kopfteil 5 abgekehrten, stirnseitigen Ausnehmung des Ventilstößels 37 ist eine vorgespannte Ventilfeder 41 angeordnet, die sich einseitig am Boden der Ausnehmung des Ventilstö-ßels 38 und anderseits an einem Boden 72 des Einsatzteils 40 abstützt. Vorzugsweise ist in diesem Ausführungsbeispiel der Erfindung noch eine zweite Ventilfeder 42 vorgesehen, die innerhalb der Aufnahmekammer 71 unter Vorspannung angeordnet ist, dabei das Ende des Ventilstößels 37 konzentrisch mit geringem Abstand umschließt und sich einseitig an dem Boden 72 des Einsatzteils 40 und anderseits unmittelbar an dem zweiten Ventilkörper 36 abstützt. Durch diese zusätzliche Feder 42 können die von den beiden Ventilkörpern 35 und 36 gebildeten Teilventile 27 und 28 des erfindungsgemäßen Dämpfungsventils 61 mit unterschiedlichen Schließkräften bzw. Vorspannkräften beaufschlagt werden. Der Ventilstößel 37 ist mit dem Anker 51 des in der Kammer 23 des Kopfteils 5 angeordneten Elektromagneten 24 verbunden.

Die Wirkungsweise dieser in Fig. 3 dargestellten Ausführungsform des erfindungsgemäßen Dämpfers ist nun wie folgt. Wird der Dämpfungskolben 2 über die Kolbenstange 3 in den Zylinder 1 hineinbewegt, so strömt einerseits das Dämpfungsmedium aus dem oberen Arbeitsraum 9 in der oben bereits beschriebenen Weise in den unteren Arbeitsraum 10. Außerdem strömt das Dämpfungsmedium aus dem oberen Arbeitsraum 9 entsprechend dem von der Kolbenstange 3 verdrängten Volumen in Richtung der in Fig. 3 eingezeichneten Pfeile 73 durch die Querbohrung(en) 49 des Innenrohrs 6, den Ringkanal 50, den Querkanal 70, die Kammer 46 sowie durch den axialen Kanal 47 und beaufschlagt hier den scheibenförmigen Ventilkörper 36, bis die durch den Strömungsdruck erzeugte Öffnungskraft größer als die Schließkraft dieses Teilventils 28 wird. In diesem Moment öffnet dieses Teilventil 28 durch axiale Verschiebung des Ventilstößels 38 über den Ventilkörper 36, so daß durch den sich ergebenden Ringspalt das Dämpfungsmedium gedrosselt weiter durch den Kanal 48 in den Ausgleichsraum 11 strömen kann. Die Rückströmung des Dämpfungsmediums erfolgt in Richtung der in Fig. 3 eingezeichneten Pfeile 74, d.h. durch den axialen Kanal 44, die stirnseitige Kammer 43 und den axialen Kanal 45. Hier beaufschlagt das Dämpfungsmedium den Ventilkörper 35 des Teilventils 27. Dieses Teilventil 27 öffnet, wenn die durch die Strömung erzeugte Öffnungskraft größer als die Schließkraft des Teilventils 27 wird. Auch in diesem Fall erfolgt über den Ventilkörper 35 eine axiale Verschiebung des Ventilstößels 37, wodurch zwischen dem Einsatzteil 40 und dem Ventilkörper 35 ein Ringspalt gebildet wird, durch den das Dämpfungsmedium gedrosselt in die Kammer 46 und von hier über den Querkanal 70, den Ringkanal 50 sowie die Querbohrung 49 wieder zurück in den oberen Arbeitsraum 9 strömt.

Auch in dieser Ausführungsform wird die Schließkraft des Dämpfungsventils 61 bzw. der beiden Teilventile 27 und 28 jeweils über den Elektromagneten in der oben bereits beschriebenen Weise beeinflußt.

In einer besonders vorteilhaften Ausführungsform der Erfindung, wie sie in Fig. 3 dargestellt ist, weist das Innenrohr 6 im Bereich des Ringkanals 50 mehrere, in axialer Richtung beabstandet angeordnete Querbohrungen 49 auf. Aufgrund dieser vorteilhaften Ausgestaltung wird der sich in den Zylinder 1 hineinbewegende Dämpfungskolben 2 im Endbereich des Zylinders 1 abgebremst, indem der Dämpfungskolben 2 nacheinander die Querbohrungen 49 sukzessive "überfährt" und so verschließt, wodurch sich insgesamt der Durchflußquerschnitt in Richtung des Ausgleichsraums 11 verkleinert, wodurch sich folglich der Strömungswiderstand vergrößert, so daß der Dämpfungskolben 2 stufenweise abgebremst wird.

In einer zusätzlichen Weiterbildung der Erfindung (Fig. 1 bis 3) besitzt der Zylinder 1 zur Niveau-Einstellung des erfindungsgemäßen Dämpfers einen Anschlußkanal 18, der einseitig in die zentrische Kammer 17 (Fig. 1, 2) bzw. in die stirnseitige Kammer 43 (Fig. 3) mündet, und an den anderseitig über ein Anschlußstück 75 eine Rohr-oder Schlauchleitung 19 (in den Figuren lediglich schematisch dargestellt) anschließbar ist. Die Leitung 19 ist an ein Mehr wegeventil 20 anschließbar, mit dem zur Niveau-Einstellung Dämpfungsmedium von einer Pumpe 21 zugeführt oder in einen Tank 22 abgelassen werden kann.

Die Erfindung ist nicht auf die dargestellten und beschriebenen Ausführungsbeispiele beschränkt, sondern umfaßt auch alle im Sinne der Erfindung gleichwirkenden Ausführungsformen.

## Ansprüche

1. Hydraulischer Stoß- und Schwingungsdämpfer, bestehend aus einem Zylinder, einem innerhalb des Zylinders zwei mit einem hydraulischen Dämpfungsmediums gefüllte und über mindestens eine Drosselung verbundene Arbeitsräume abteilenden, axialbeweglich angeordneten Dämpfungskolben, einer mit dem Dämpfungskolben verbundenen, abgedichtet aus dem Zylinder nach außen geführten Kolbenstange sowie einem mit einem der Arbeitsräume verbundenen Ausgleichsraum zur Aufnahme eines von der Kolbenstange verdrängten Volumens des Dämpfungsmediums, wobei am Übergang zwischen dem Arbeitsraum und dem Ausgleichsraum ein über einen Elektromagneten ansteuerbares, mit einer Schließkraft beaufschlagtes Dämpfungsventil angeordnet ist,

**dadurch gekennzeichnet,** daß das Dämpfungsventil (26, 61) derart in Reihe zu der Drosselung angeordnet ist, daß das gesamte zwischen dem Arbeitsraum (9) und dem Ausgleichsraum (11) strömende Dämpfungsmedium durch das Dämpfungsventil (26, 61) fließt, und daß der Elektromagnet (24) derart mit einem Ventilkörper (30; 35; 36) des Dämpfungsventils (26, 61) verbunden ist, daß dessen Schließkraft unmittelbar durch den Elektromagneten (24) veränderbar ist.

2. Stoß- und Schwingungsdämpfer nach Anspruch 1,
**dadurch gekennzeichnet,** daß die Schließkraft des Dämpfungsventils (26; 61) durch den Elektromagneten (24), ausgehend von einer durch mindestens eine vorgespannte Schließfeder (33; 41, 42) erzeugten Vorspannkraft stufenlos vergrößerbar und/oder verkleinerbar ist.

3. Stoß- und Schwingungsdämpfer nach Anspruch 1 oder 2,
**dadurch gekennzeichnet,** daß der Ventilkörper (30) des Dämpfungsventils (26) ringscheibenförmig ausgebildet ist, mit einer ringförmigen Ventilsitzfläche (34) zusammenwirkt und mit geringem Spiel auf einem mit dem Elektromagneten (24) verbundenen Ventilstößel (32) sitzt, wobei sich die Schließfeder (33) vorzugsweise einseitig an dem Ventilstößel (32) und anderseitig an einem Boden einer ortsfest angeordneten Einsatzhülse (29) abstützt.

4. Stoß- und Schwingungsdämpfer nach Anspruch 1 oder 2,
**dadurch gekennzeichnet,** daß das Dämpfungsventil (61) als Doppelventil mit zwei jeweils einen Ventilkörper (35, 36) aufweisenden Teilventilen (27, 28) derart ausgebildet ist, daß das erste Teilventil (28) mit dem Ventilkörper (36) die Strömung des Dämpfungsmediums in den Ausgleichsraum (11) hinein und das andere Teilventil (27) mit dem Ventilkörper (35) die Strömung aus dem Ausgleichsraum (11) heraus dämpfend beeinflußt.

5. Stoß- und Schwingungsdämpfer nach Anspruch 4,
**dadurch gekennzeichnet,** daß die Ventilkörper (35, 36) der beiden Teilventile (27, 28) jeweils ringscheibenförmig ausgebildet sind, mit jeweils einer Sitzfläche zusammenwirken und auf einem gemeinsamen, mit dem Elektromagneten (24) verbundenen Ventilstößel (37) sitzen.

6. Stoß- und Schwingungsdämpfer nach Anspruch 4 oder 5,
**dadurch gekennzeichnet,** daß die Ventilkörper (35, 36) dr Teilventile (27, 28) von einer gemeinsamen Ventilfeder (41) über den Ventilstößel (37) mit einer Vorspannkraft beaufschlagt sind.

7. Stoß und Schwingungsdämpfer nach Anspruch 6,
**dadurch gekennzeichnet,** daß der Ventilkörper (36) des zweiten Teilventils (28) von einer zweiten Ventilfeder (42) mit einer zusätzlichen Vorspannkraft beaufschlagt ist, wobei sich die Ventilfedern (41, 42) vorzugsweise an einem ortsfest gelagerten Einsatzteil (40) abstützen.

8. Stoß- und Schwingungsdämpfer nach einem oder mehreren der Ansprüche 3 bis 7,
**dadurch gekennzeichnet,** daß sich die ringscheibenförmigen Ventilkörper (30; 35, 36) auf ihren der jeweiligen Sitzfläche abgekehrten Seiten jeweils an einer Ringstufe (31; 38, 39) des Ventilstößels (32, 37) abstützen.

9. Stoß- und Schwingungsdämpfer nach einem oder mehreren der Ansprüche 1 bis 8,
**dadurch gekennzeichnet,** daß die Kolbenstange (3) hohlzylindrisch sowie der Dämpfungskolben (2) ringförmig ausgebildet sind, und daß innerhalb des Zylinders (1) koaxial zu diesem ein sich mit geringem umfänglichen Spiel durch den ringförmigen Dämpfungskolben (2) hindurch und in die hohlzylindrische Kolbenstange (3) hinein erstreckendes Innenrohr (6) angeordnet ist.

10. Stoß- und Schwingungsdämpfer nach Anspruch 9,
**dadurch gekennzeichnet,** daß die Kolbenstange (3) dadurch abgedichtet aus dem Zylinder nach außen geführt ist, daß zwischen dem Außenumfang der Kolbenstange (3) und dem Zylinder (1) ein äußerer Dichtring (7) sowie zwischen dem Innenumfang der Kolbenstange (3) und dem Außenumfang des Innenrohrs (6) ein innerer Dichtring (8) jeweils unter dichtender Anlage angeordnet sind.

11. Stoß- und Schwingungsdämpfer nach Anspruch 9 oder 10,
**dadurch gekennzeichnet,** daß das Innenrohr (6) an einem dem nach außen geführten Ende der Kolbenstange (3) gegenüberliegenden Kopfteil (5) des Zylinders (1) befestigt ist, wobei ein dem Kopfteil (5) zugekehrter Volumenbereich des Innenrohrs (6) den mit dem Arbeitsraum (9) über das Dämpfungsventil (26, 61) verbundenen Ausgleichsraum (11) bildet.

12. Stoß- und Schwingungsdämpfer nach einem oder mehreren der Ansprüche 9 bis 11,
**dadurch gekennzeichnet,** daß der Ausgleichsraum (11) von einem innerhalb des Innenrohres (6) frei beweglich angeordneten, schwimmenden Kolben (12) begrenzt ist, wobei ein von dem Ausgleichsraum (11) über den schwimmenden Kolben (12) getrennter Volumenbereich des Innenrohrs (6) eine Gasfederkammer (13) bildet.

13. Stoß- und Schwingungsdämpfer nach Anspruch 12,
**dadurch gekennzeichnet,** daß das Innenrohr (6) in seinem freien, dem nach außen geführten Ende der Kolbenstange (3) zugekehrten Endbereich gasdicht geschlossen ist, wobei die Kolbenstange (3) in ihrem sich axial über das Innenrohr (6) hinaus nach außen erstreckenden Bereich eine Lüftungsöffnung (60) aufweist.

14. Stoß- und Schwingungsdämpfer nach Anspruch 12,

**dadurch gekennzeichnet,** daß das Innenrohr (6) im Bereich einer dem nach außen geführten Ende der Kolbenstange (3) zugekehrten Bodenwandung mindestens eine Durchgangsöffnung aufweist, wobei das nach außen geführte Ende der Kolbenstange (3) gasdicht geschlossen ist.

15. Stoß- und Schwingungsdämpfer nach einem oder mehreren der Ansprüche 11 bis 14,

**dadurch gekennzeichnet,** daß das Dämpfungsventil (26, 61) im Verbindungsbereich zwischen dem Innenrohr (6) und dem Kopfteil (5) angeordnet ist, wobei mindestens ein Querkanal (16) des Kopfteils (5) und/oder mindestens eine Querbohrung (49) des Innenrohrs (6) über das Dämpfungsventil (26, 61) zu dem Ausgleichsraum (11) führt.

16. Stoß- und Schwingungsdämpfer nach einem oder mehreren der Ansprüche 11 bis 15,

**dadurch gekennzeichnet,** daß der Elektromagnet (24) innerhalb einer in dem Kopfteil (5) gebildeten Kammer (23) angeordnet ist, wobei der Ventilstößel (32, 37) mit einem Anker (51) des Elektromagneten (24) verbunden ist oder selbst einen Anker bildet.

17. Stoß- und Schwingungsdämpfer nach einem oder mehreren der Ansprüche 11 bis 16,

**dadurch gekennzeichnet,** daß das Innenrohr (6) in seinem dem Kopfteil (5) zugekehrten, innerhalb eines Kolbenhub-Endbereichs des Arbeitsraums (9) liegenden Abschnitt mehrere, in axialer Richtung beabstandet angeordnete, zu dem Dämpfungsventil (61) führende Querbohrungen (49) aufweist.

18. Stoß- und Schwingungsdämpfer nach einem oder mehreren der Ansprüche 1 bis 16,

**dadurch gekennzeichnet,** daß der Zylinder (1) einen nach außen mit einem Anschlußstück (75) versehenen Anschlußkanal (18) zum Anschluß einer über ein Mehrwegeventil (20) mit einer Zuführungs-Pumpe (21) oder einem Ablaß-Tank (22) verbindbaren Leitung (19) für das Dämpfungsmedium aufweist.

EP 0 318 816 A2

Fig. 1

Fig. 2

*Fig. 3*